# EUROPEAN PATENT APPLICATION

(11) **EP 3 273 666 A1**
(43) Date of publication of application: **24.01.2018**
(21) Application number: 15885123.8
(22) Date of filing: 15.06.2015
(51) Int. Cl.: H04L 29/12

(54) **METHOD AND APPARATUS FOR CONFIGURING NETWORK PARAMETERS OF LOCAL AREA NETWORK**

(30) Priority: 19.03.2015 CN 201510121528
(71) Applicant: ZTE Corporation, Shenzhen, Guangdong 518057 (CN)
(72) Inventor: WEI, Yu, Shenzhen Guangdong 518057 (CN); WU, Yunfei, Shenzhen Guangdong 518057 (CN); LI, Lijun, Shenzhen Guangdong 518057 (CN)
(74) Representative: Winter, Brandl, Fürniss, Hübner, Röss, Kaiser, Polte - Partnerschaft mbB
(86) International application number: PCT/CN2015/081465
(87) International publication number: WO 2016/145740

(57) **Abstract**

Disclosed are a method and apparatus for configuring network parameters of a local area network, which relate to the technical field of communications and for solving a problem in the prior art that the process of configuring network parameters of a local area network cannot enable network resources to be fully utilized. The method includes: determining whether a local area network gateway has acquired a DNS server address; and in the case where the local area network gateway has not yet acquired the DNS server address, assigning a private network IP address for a network device within the local area network, with a lease time of the private network IP address being a first lease time, and the first lease time being less than a pre-set threshold.

## Description

### TECHNICAL FIELD

The present invention relates to the technical field of communications, and in particular relates to a method and apparatus for configuring network parameters of a local area network.

### BACKGROUND

In a home or office environment, a variety of devices are typically networked by home gateways or office servers and broadband access services are provided for network devices within a local area network. For example, IP (Internet Protocol) addresses and addresses of DNS (Domain Name System) servers are assigned to LAN (Local Area Network) side device, so that the domain name accesses initiated by devices can be resolved by the DNS server to achieve the normal access to an external network.

There are two common ways for assigning DNS addresses. In the first way, the home gateway assigns its own private IP address to the LAN-side device as an address of DNS server and provide DNS proxy services by itself, DNS requests of the LAN-side device are all sent to the home gateway to be resolved, and a home gateway proxy forwards the requests to a DNS server in a public network and forwards a response of the DNS server in the public network to the LAN-side device. In the second way, the home gateway assigns an acquired public network DNS server address to the LAN-side device, so that the DNS request initiated by the LAN-side device is directly sent to a public network DNS server and the home gateway itself does not need to have a proxy forwarding function.

The home gateway in the second way is relatively simpler, however it brings a problem. That is, when the LAN-side device requests the assignment of the IP address and the DNS address by DHCP, no DNS address can be assigned if the home gateway has not acquired the DNS server address from the public network. If the home gateway just assigns the IP address without assigning the DNS address, then after the home gateway acquires the DNS server address of the public network, the home gateway has to wait until the LAN-side device initiates a renewal to assign the DNS server address. Before the home gateway acquires the DNS server address of the public network, the LAN-side device cannot resolve the domain name for a long period of time. If the home gateway does not assign the IP address and the DNS address until the home gateway acquires the public network DNS server address, it will cause that in the waiting period the LAN-side device has no IP address and cannot conduct other business which only needs the IP address and does not need the DNS service. For example, the communication services among devices within the local area network cannot be conducted. The utilizing efficiency of the network resources is significantly reduced.

With respect to a problem that configuration steps of network parameters of the local area network cannot allow the network resources to be fully utilized, there is no effective solution in the existing art.

### SUMMARY

A technical problem to be solved by this invention is to provide a method and apparatus for configuring network parameters of a local area network so as to solve the problem in the existing art that a configuration process of network parameters of the local area network cannot allow the network resources to be fully utilized.

An embodiment of the present invention, provides a method for configuring network parameters of a local area network, including: determining whether a local area network gateway has acquired a DNS server address; and assigning a private network IP address for a network device within the local area network in the condition that the local area network gateway has not yet acquired the DNS server address, with a lease time of the private network IP address being a first lease time, and the first lease time less than a pre-set threshold.

In an embodiment of the invention, the assigning a private network IP address for a network device within the local area network in the condition that the local area network gateway has not yet acquired the DNS server address includes: in the condition that the local area network gateway has not yet acquired the DNS server address, assigning a private network IP address for a network device within the local area network and taking an IP address of the local area network gateway as the DNS server address for the network device within the local area network.

In an embodiment of the application, the method further includes: before an end of the first lease time, continuing to determine whether the local area network gateway has acquired the DNS server address and assign a corresponding private network IP address and a corresponding lease time, until it is determined that the local area network gateway has acquired the DNS server address; and providing a DNS resolving service for the network device within the local area network through the local area network gateway.

In an embodiment of the application, the method further includes: before an end of the first lease time, continuing to determine whether the local area network gateway has acquired the DNS server address and assign a corresponding private network IP address and a corresponding lease time, until it is determined that the local area network gateway has acquired the DNS server address; and assigning the DNS server address and the private network IP address for the network device within the local area network, with a lease time of the private network IP address and the DNS server address being a second lease time, and the first lease time being shorter than the second lease time.

In an embodiment of the invention, the first lease time comprises 1 to 5 minutes.

Another embodiment of the present application provides an apparatus for configuring network parameters of a local area network, including a determination unit configured to determine whether a local area network gateway has acquired a DNS server address, and an assignment unit configured to assign a private network IP address for a network device within the local area network in the condition that the local area network gateway has not yet acquired the DNS server address, with a lease time of the private network IP address being a first lease time, and the first lease time being less than a pre-set threshold.

In an embodiment of the present invention, the assignment unit is used to: in the condition that the local area network gateway has not yet acquired the DNS server address, assign a private network IP address for a network device within the local area network and take an IP address of the local area network gateway as the DNS server address for the network device within the local area network.

In an embodiment of the present invention, the apparatus further includes a providing unit. The determination unit is further configured to: before an end of the first lease time, continue to determine whether the local area network gateway has acquired the DNS server address and to assign a corresponding private network IP address and a corresponding lease time, until it is determined that the local area network gateway has acquired the DNS server address. The providing unit is configured to provide a DNS resolving service for the network device within the local area network through the local area network gateway.

In an embodiment of the present invention, the determination unit is further configured to continue to: before an end of the first lease time, continue to determine whether the local area network gateway has acquired the DNS server address and to assign a corresponding private network IP address and a corresponding lease time, until it is determined that the local area network gateway has acquired the DNS server address; and the assignment unit is configured to assign the DNS server address and the private network IP address for the network device within the local area network, with a lease time of the private network IP address and the DNS server address being a second lease time, and the first lease time being shorter than the second lease time.

In an embodiment of the invention, the first lease time comprises 1 to 5 minutes.

According to the method and apparatus for configuring network parameters of a local area network, it is first determined whether the local area network gateway has acquired a DNS server address, and a private network IP address is assigned to a network device within the local area network in the condition that the local area network gateway has not yet acquired the DNS server address, and the lease time of the private network IP address is set to be less than a pre-set threshold. In this way, in the case where the local area network has not acquired the DNS server address, the local area network is not only able to conduct an IP based intercommunication among the network devices within the local area network, but also able to quickly obtain the next renewal opportunity without consuming too long in this lease time, thereby effectively utilizing the network resources.

### BRIEF DESCRIPTION OF DRAWINGS

FIG. 1 is a flowchart of a method for configuring network parameters of a local area network provided by an embodiment of the invention;
FIG. 2 is another flowchart of the method for configuring network parameters of a local area network provided by an embodiment of the present invention;
FIG. 3 is another flowchart of the method for configuring network parameters of a local area network provided by an embodiment of the present invention;
FIG. 4 is a detailed flowchart of the method for configuring network parameters of a local area network provided by an embodiment of the present invention; and
FIG. 5 is a schematic structural diagram of an apparatus for configuring network parameters of a local area network provided by an embodiment of the present invention.

### DETAILED DESCRIPTION

The present application will be described in detail with reference to the accompanying drawings. It is to be understood that the specific embodiments described herein are merely for illustrating the present application and are not intended to limit the invention.

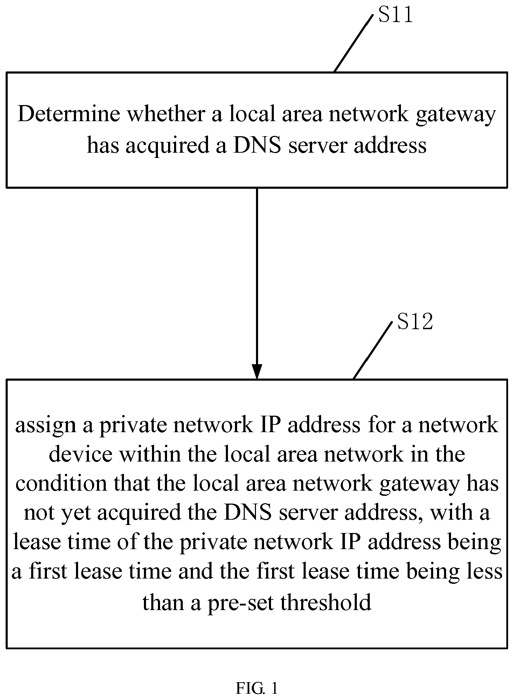

As shown in FIG. 1, a method for configuring network parameters of a local area network provided by an embodiment of the present application includes S11 and S12.

At S11, it is determined whether a local area network gateway has acquired a DNS server address.

At S12, a private network IP address is assigned for a network device within the local area network in the condition that the local area network gateway has not yet acquired the DNS server address, with a lease time of the private network IP address being a first lease time, and the first lease time being less than a pre-set threshold.

According to the method for configuring network parameters of a local area network provided by embodiments of the present invention, it is first determined whether the local area network gateway has acquired a DNS server address, and a private network IP address is assigned to a network device within the local area network in the condition that the local area network gateway has not yet acquired the DNS server address, and the lease time of the private network IP address is set to be less than a pre-set threshold. In this way, in the case where the local area network has not acquired the DNS server address, the local area network is not only able to conduct an IP based intercommunication among the network devices within the local area network, but also able to quickly obtain the next renewal opportunity without consuming too long in this lease time, thereby effectively utilizing the network resources.

In the embodiment of the present invention, the pre-set threshold may be a time shorter than a general network lease time. For example, if a general lease time is 1 day, then the pre-set threshold may be set as 1 hour, 10 minutes, 1 minute and the like, which is not limited by the embodiment of the present invention, such that a lease renewal can be carried out in time and the network device is able to obtain an opportunity for updating the address.

At step S12, the assigning a private network IP address for a network device within the local area network in the condition that the local area network gateway has not yet acquired the DNS server address includes: in the condition that the local area network gateway has not yet acquired the DNS server address, assigning a private network IP address for a network device within the local area network and taking an IP address of the local area network gateway as the DNS server address for the network device within the local area network.

In this way, although the local area network gateway has not acquired the DNS server address, the local area network gateway may send its own IP address to various network devices within the local area network as the DNS server address. After the local area network gateway acquires the DNS server address, various network devices in the local area network may take the local area network gateway as a DNS proxy server and obtain a DNS domain name resolution service indirectly. Since the first lease time is relatively short, for example, the first lease time may be between 1 minute and 5 minutes, the local area network gateway may enter a next renewal period at a fast rate, thus can quickly obtain an opportunity for updating the DNS server address, so that the local area network gateway may continue communicating with the DNS server directly in a non-proxy manner.

The local area network gateway acquiring the DNS server address and using the address to provide the domain name resolution service for the network device may be implemented by the following steps:
Before an end of the first lease time (for example, at a half of the first lease time), it is continued to determine whether the local area network gateway has acquired the DNS server address and to assign a corresponding private network IP address and a lease time, until it is determined that the local area network gateway has acquired the DNS server address; and
the DNS resolution service is provided for the network device within the local area network through the local area network gateway. That is, the DNS requests of the LAN-side device can be sent to the local area network gateway, the local area network gateway forwards the requests to the DNS server in the public network and further forwards the response of the DNS server in the public network to the LAN-side device, such that the domain name resolution is achieved.

In the above embodiment, the network device in the local area network establishes a service relationship with the DNS server by taking the local area network gateway as a bridge, but the present invention is not limited thereto. In other embodiments of the present invention, the network device in the local area network may also acquire the DNS server address directly, thereby obtaining the domain name resolution service directly from the DNS server.

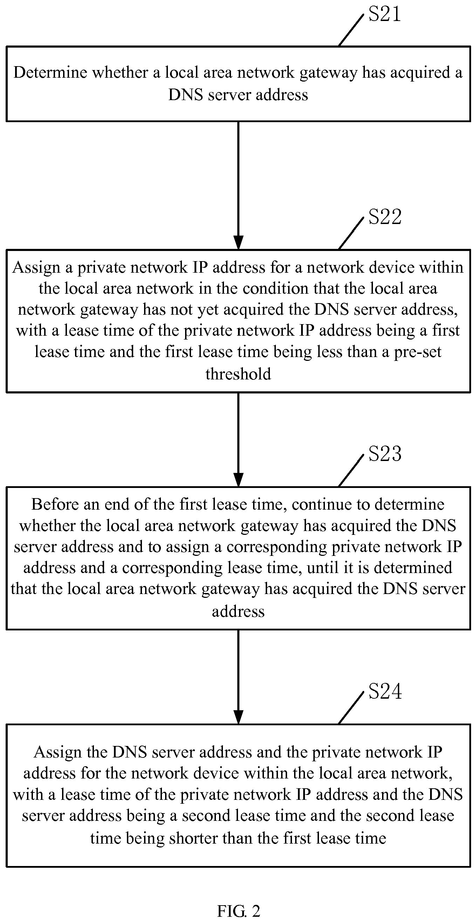

For example, as shown in FIG. 2, in an embodiment of the present invention, the method for configuring the network parameters of the local area network may include S21-524.

At S21, it is determined whether a local area network gateway has acquired a DNS server address.

At S22, in the condition that the local area network gateway has not acquired the DNS server address, a private network IP address is assigned for a network device in the local area network, with a lease time of the private network IP address being a first lease time and the first lease time being shorter than a pre-set threshold.

At S23, before an end of the first lease time, it is continued to determine whether the local area network gateway has acquired the DNS server address and to assign a corresponding private network IP address and a lease time, until it is determined that the local area network gateway has acquired the DNS server address.

At S24, the DNS server address and the private IP address are assigned for the network device in the local area network, with a lease time of the private network IP address and the DNS server address being a second lease time, and the first lease time being shorter than the second lease time.

In the present embodiment, when the local area network gateway has not yet acquired the DNS server address, only the private network IP is assigned for various network devices in the local area network and a relatively short lease time is designated for this address assignment. After the short lease time is renewed for sever times and the local area network gateway finally obtains the DNS server address, the DNS server address and the private network IP address are assigned to various network devices. The network state is stable after the DNS server address and the private network IP address are obtained, so the network device in the local area network can access the network normally. In order to avoid frequent lease time renewing, preferably, a relatively long lease time may be designated for this address assignment, for example, 0.5 day to 2 days.

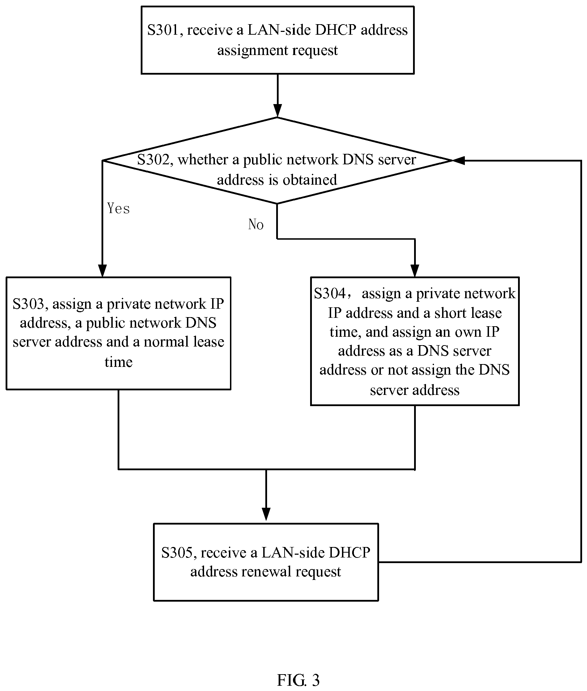

The method for configuring network parameters of the local area network is described below in details through specific embodiments. As shown in FIG. 3, the method may include the steps S301 to S305.

At S301, a LAN-side Dynamic Host Configuration Protocol (DHCP) address assignment request is received.

At S302, it is determined whether a public network DNS server address has been obtained. If the public network DNS server address has been obtained, turning to perform S303; if the public network DNS server address has not been obtained, turning to perform S304.

At S303, a private network IP address, a public network DNS server address and a normal lease time are assigned, and turning to perform S305.

At S304, the private network IP address and a short lease time are assigned, an own IP address is assigned as the DNS server address or no DNS server address is assigned, and turning to perform S305.

At S305, a LAN-side DHCP address renewal request is received, and turning to perform S302.

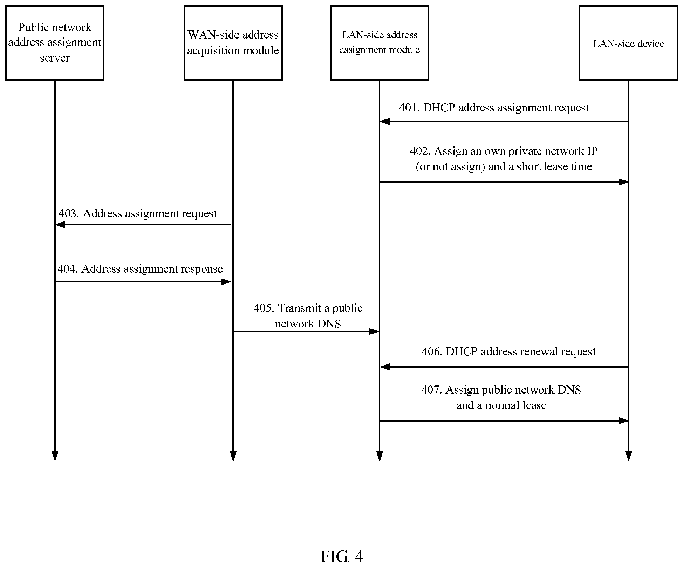

FIG. 4 illustrates in details a detail flowchart of the method for configuring network parameters of the local area network in the case where the LAN-side address is assigned before the WAN-side address is obtained. As shown in FIG. 4, the method mainly includes the following steps.

At step S401, a LAN-side address assignment module receives a DHCP address acquisition request from a LAN-side device.

At step S402, the LAN-side address assignment module responds to a DHCP message to the LAN-side device, and assigns a short lease time (for example, 1 minute) and an private network IP address of a home gateway itself as a DNS address.

At step S403, a WAN-side address acquisition module initiates an address acquiring request to a public network server.

At step S404, the WAN-side address acquisition module receives a response to the address acquiring request from the public network server, and successfully obtains a public network DNS address.

At step S405, the WAN-side address acquisition module transmits the obtained public network DNS address to the LAN-side address assignment module.

At step S406, the LAN-side address assignment module receives a DHCP address renewal request sent by the LAN-side device.

At step S407, the LAN-side address assignment module responds to the DHCP message to the LAN-side device and assigns the public network DNS address and a normal lease time (for example, 1 day).

By employing the above technical solutions, it is not only able to quickly assign the private network IP address to the LAN-side device, but also able to assign the public network DNS address acquired later to the LAN-side device in time.

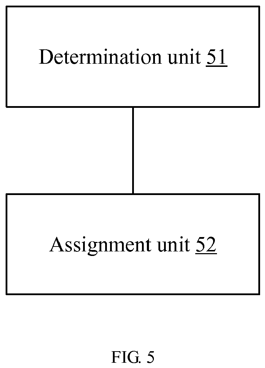

Accordingly, as shown in FIG. 5, an embodiment of the present application further provides an apparatus for configuring network parameters of the local area network, including a determination unit 51 and an assignment unit 52.

The determination unit 51 is configured to determine whether a local area network gateway has acquired a DNS server address.

The assignment unit 52 is configured to assign a private network IP address for a network device within the local area network in the condition that the local area network gateway has not yet acquired the DNS server address, with a lease time of the private network IP address being a first lease time, and the first lease time being less than a pre-set threshold.

According to the apparatus for configuring network parameters of a local area network, the determination unit 51 can determine whether the local area network gateway has acquired a DNS server address. The assignment unit 52 can assign a private network IP address for the network device within the local area network in the condition that the local area network gateway has not yet acquired the DNS server address. The lease time of the private network IP address is set to be less than a pre-set threshold. In this way, in the case where the local area network has not acquired the DNS server address, the local area network is not only able to conduct an IP based intercommunication among the network devices within the local area network, but also able to quickly obtain the next renewal opportunity without consuming too long in this lease time, thereby effectively utilizing the network resources.

In embodiments of the present invention, the first lease time includes 1 minute to 5 minutes.

In an embodiment of the present invention, the assignment unit 52 may be configured to: in the condition that the local area network gateway has not yet acquired the DNS server address, assign the private network IP address for the network device within the local area network and take an IP address of the local area network gateway as the DNS server address for the network device within the local area network.

In an embodiment of the present application, the apparatus further includes a providing unit. The determination unit 51 is further configured to: before an end of the first lease time, continue to determine whether the local area network gateway has acquired the DNS server address and assign a corresponding private network IP address and a corresponding lease time, until it is determined that the local area network gateway has acquired the DNS server address. The providing unit is configured to provide a DNS resolving service for the network device within the local area network through the local area network gateway.

In an embodiment of the present invention, the determination unit 51 is further configured to: before an end of the first lease time, continue to determine whether the local area network gateway has acquired the DNS server address and to assign a corresponding private network IP address and a corresponding lease time, until it is determined that the local area network gateway has acquired the DNS server address.

The assignment unit 52 is further configured to assign the DNS server address and the private network IP address for the network device within the local area network, with a lease time of the private network IP address and the DNS server address being a second lease time, and the second lease time being shorter than the first lease time.

Although preferred embodiments of the present application have been disclosed for illustrative purposes, those skilled in the art will appreciate that various modifications, additions and substitutions are possible, as such, the scope of the application should not be limited to the embodiments described above.

### Industrial Applicability

Based on the above technical solution provided by embodiments of the present application, it is determined whether the local area network gateway has acquired the DNS server address, the private network IP address is assigned to the network device within the local area network in the condition that the local area network gateway has not yet acquired the DNS server address, and the lease time of the private network IP address is set to be less than a pre-set threshold. In this way, in the case where the local area network has not acquired the DNS server address, the local area network is not only able to conduct an IP based intercommunication among the network devices within the local area network, but also able to quickly obtain the next renewal opportunity without consuming too long in this lease time, thereby effectively utilizing the network resources.

## Claims

1. A method for configuring network parameters of a local area network, comprising:
determining whether a local area network gateway has acquired a Domain Name System, DNS, server address; and
assigning a private network IP address for a network device within the local area network in the condition that the local area network gateway has not yet acquired the DNS server address, wherein a lease time of the private network IP address is a first lease time, and the first lease time is less than a pre-set threshold.

2. The method according to claim 1, wherein the assigning a private network IP address for a network device within the local area network in the condition that the local area network gateway has not yet acquired the DNS server address comprises:
in the condition that the local area network gateway has not yet acquired the DNS server address, assigning a private network IP address for a network device within the local area network and taking an IP address of the local area network gateway as the DNS server address for the network device within the local area network.

3. The method according to claim 2, further comprising:
before an end of the first lease time, continuing to determine whether the local area network gateway has acquired the DNS server address and assign a corresponding private network IP address and a corresponding lease time, until it is determined that the local area network gateway has acquired the DNS server address; and
providing a DNS resolving service for the network device within the local area network through the local area network gateway.

4. The method according to claim 1, further comprising:
before an end of the first lease time, continuing to determine whether the local area network gateway has acquired the DNS server address and assign a corresponding private network IP address and a corresponding lease time, until it is determined that the local area network gateway has acquired the DNS server address; and
assigning the DNS server address and the private network IP address for the network device within the local area network, wherein a lease time of the private network IP address and the DNS server address is a second lease time, and the first lease time is shorter than the second lease time.

5. The method according to any one of claims 1 to 4, wherein the first lease time comprises 1 to 5 minutes.

6. An apparatus for configuring network parameters of a local area network, comprising:
a determination unit configured to determine whether a local area network gateway has acquired a DNS server address; and
an assignment unit configured to assign a private network IP address for a network device within the local area network in the condition that the local area network gateway has not yet acquired the DNS server address, wherein a lease time of the private network IP address is a first lease time, and the first lease time is less than a pre-set threshold.

7. The apparatus according to claim 6, wherein the assignment unit is configured to:
in the condition that the local area network gateway has not yet acquired the DNS server address, assign a private network IP address for a network device within the local area network and take an IP address of the local area network gateway as the DNS server address for the network device within the local area network.

8. The apparatus according to claim 7, further comprising a providing unit, wherein
the determination unit is further configured to: before an end of the first lease time, continue to determine whether the local area network gateway has acquired the DNS server address and to assign a corresponding private network IP address and a corresponding lease time, until it is determined that the local area network gateway has acquired the DNS server address;
the providing unit is configured to provide a DNS resolving service for the network device within the local area network through the local area network gateway.

9. The apparatus according to claim 6, wherein
the determination unit is further configured to: before an end of the first lease time, continue to determine whether the local area network gateway has acquired the DNS server address and to assign a corresponding private network IP address and a corresponding lease time, until it is determined that the local area network gateway has acquired the DNS server address;
the assignment unit is configured to assign the DNS server address and the private network IP address for the network device within the local area network, wherein a lease time of the private network IP address and the DNS server address is a second lease time, and the first lease time is shorter than the second lease time.

10. The apparatus according to any one of claims 6 to 9, wherein the first lease time comprises 1 to 5 minutes.
